(19) Europäisches Patentamt
European Patent Office
Office européen des brevets

(11) **EP 4 436 103 A1**

(12) **EUROPEAN PATENT APPLICATION**

(43) Date of publication:
**25.09.2024 Bulletin 2024/39**

(21) Application number: **23163788.5**

(22) Date of filing: **23.03.2023**

(51) International Patent Classification (IPC):
***H04L 9/32*** (2006.01)     ***H04N 21/845*** (2011.01)
***G10L 25/51*** (2013.01)

(52) Cooperative Patent Classification (CPC):
**H04L 9/3247; H04N 21/2187; H04N 21/2335;**
**H04N 21/23892; H04N 21/2402; H04N 21/26603;**
**H04N 21/8358;** G10L 19/167; G10L 25/51;
H04L 2209/20; H04L 2209/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Axis AB**
**223 69 Lund (SE)**

(72) Inventors:
• **LEXFORS, Linus**
**223 69 LUND (SE)**

• **Völcker, Björn**
**223 69 LUND (SE)**
• **NILSSON, Hannes**
**223 69 LUND (SE)**
• **HOLMSTRÖM, Caroline**
**223 69 LUND (SE)**

(74) Representative: **AWA Sweden AB**
**Box 5117**
**200 71 Malmö (SE)**

Remarks:
Amended claims in accordance with Rule 137(2)
EPC.

(54) **METHOD AND DEVICE FOR PROVIDING A SIGNED AUDIO BITSTREAM WITH VARIABLE GRANULARITY**

(57) A method of providing a signed bitstream (B*), performed in association with a process of capturing an audio signal (A) and encoding it as a bitstream, which includes a sequence of data units (202) representing time segments (201) of the audio signal. The method comprises: assigning a score to each data unit; monitoring an accumulated score of data units back to a reference point; when the accumulated score reaches a threshold ($S_t$), inserting into the bitstream a signature unit (203) including a digital signature (s(H1)) of fingerprints (h) of a subsequence of the data units back to the reference point; and resetting the reference point. The score is based on a) a detected content of the time segment of the audio signal corresponding to the data unit, b) contextual information relating the time segment to a history of the audio signal, and/or c) information relating to the conditions of capturing the time segment.

Fig. 2A

**EP 4 436 103 A1**

**Description**

**TECHNICAL FIELD**

The present disclosure relates to the field of security arrangements for protecting programs or data against unauthorised activity, especially in connection with storage and transmission of audio data. In particular, novel techniques for providing a signed audio bitstream with variable granularity will be proposed.

**BACKGROUND**

Digital signatures provide a layer of validation and security to digital messages that are transmitted through a non-secure communication channel. By means of the digital signature, the authenticity or integrity of a message can be validated, and non-repudiation can be ensured. With regard to audio coding in particular, safe and highly efficient methods for digitally signing a coded audio signal (audio bitstream) have been described in the prior art. Such methods may include associating the audio bitstream with one or more electronic signatures, including inserting electronic signatures at constant or variable intervals into the audio bitstream, wherein the electronic signatures have been generated from the coded or decoded audio data, or from a hash of the audio data. The introduced digital signatures represents a bitrate overhead, in the sense that the audio bitstream will occupy more communication bandwidth and/or more storage space than before signing, and efforts have been made to limit this overhead.

In particular, US8885818B2 relates to techniques for authentication of Advanced Audio Coding (AAC) streams. A method is disclosed in which a cryptographic value of a number $N \geq 1$ of successive data frames is generated and inserted into a frame of the AAC stream subsequent to the $N$ successive data frames. Typically, it is the encoder that decides on the number $N$ of covered AAC frames. In order to minimize the bit rate overhead introduced by the identifier, the encoder may choose the largest value of $N$ that satisfies the constraint that the time representation of the $N$ AAC frames does not exceed 0.5 seconds.

Further, US10263783B2 discloses a system for authenticating an audio stream, in which a sending entity generates a hierarchical authentication structure (which provides robustness against packet losses) including elements representing hash values of the divided fragments on several different granularity levels, wherein a hash value for a data fragment on a higher granularity level is based on hash values of data fragments on a lower granularity level. A receiving entity in the system then authenticates the data fragments of the data stream based on comparing a reconstructed value on the top level of the hierarchical authentication structure with the signed value on the top level of the generated hierarchical authentication structure. A security module in the sending entity signs the top level of the structure with a digital signature. The hash values of a selected granularity level are then encoded and transmitted together with the signature of the sending entity in addition to the audio stream. The sending entity may sign the audio stream periodically.

In the field of predictive video coding, US10713391B2 proposes a video processing application which receives a video sequence (e.g., in the ITU-T H.264 format) from a capture device, determines saliency of objects based on at least one of motion detection, contrast, color, and semantic properties, and decomposes the video into fragments based on the saliency. A salient fragment of the video is a subset of frames of the video and a subset of pixels from the subset of frames. The salient fragment may be described as an atom of the original video that starts when a block of pixels appears in a scene and ends when the block of pixels disappears from the scene. The salient fragment can be expected to be semantically uniform. Using this decomposition, the video processing application associates a digital signature with each video fragment before transmitting the video fragment to a destination, and authenticates, at the destination, the video fragment based on the digital signature to determine whether the video fragment has been altered during the transmission and the source of the video fragment.

Users' desire to play, edit or extract smaller segments of an audio bitstream sets a practical upper limit on how far apart the electronic signatures can be inserted. Indeed, a particular digital signature can successfully be used to validate audio data only if the signed audio data is available in its entirety. An audio bitstream format may be considered too coarse-grained in this respect (*signing granularity*) if users report they are repeatedly confronted with irrelevant audio content, outside the user's search query. Annoyances of this kind may suggest that the signed chunks are too large and the spacing of the electronic signatures in the bitstream should be set to a lower value.

A peculiarity of video monitoring, including video surveillance, is that a significant share of the captured video content is eventless or uninteresting for other reasons, so that in practice it will never be played back, nor will the accompanying audio track. The tiny remainder of the material is where the suspected illegal or otherwise abnormal events are expected to have occurred, and it may therefore be subject to relatively intense search, browsing and processing. Likewise, users may want to extract smaller segments to be shared with authorities or other external parties for forensic or evidentiary purposes. It would be desirable to propose a signed audio bitstream format that responds adequately to the needs of the video monitoring use case.

# EP 4 436 103 A1

## SUMMARY

One objective of the present disclosure is to make available a method for providing a signed audio bitstream, one that can be performed together with a running process of capturing and encoding an audio signal. Preferably, it is envisaged to execute the method in real time relative to the audio capturing process, e.g., the achievable steady-state processing rate of the signing process should not be lower than the processing rate of the audio capturing or encoding process, and the added processing latency should be acceptable. A further objective of the present disclosure is to make available a method for providing a signed bitstream which, on the one hand, devotes an acceptably small share of the total bitrate to digital signatures and in which, on the other hand, the passages of likely forensic interest have a conveniently fine signing granularity. In particular, the user should be offered the freedom to play, edit and/or extract relatively short segments of the audio signal in the passages of likely interest; only relatively rarely will the user be distracted by irrelevant audio content. A further objective is to provide a signed bitstream in which the passages of likely forensic interest are particularly robust to data loss. A further objective is to make available a method that lends itself to a lean computer implementation, without the need for introducing a large lookahead, buffering or a multitude of new internal variables. A still further objective is to make available a controller for a signature-generating component arranged to insert signature units into an audio bitstream with some of the above characteristics.

At least some of these objectives are achieved by the invention as defined in the independent claims. The dependent claims relate to advantageous embodiments of the invention.

In a first aspect, there is provided a method which is suitable for providing a signed bitstream B* and which is to be performed in association with a process where an audio signal A is captured and encoded as a bitstream B. It is assumed that the bitstream B includes a sequence of data units that represent respective time segments of the audio signal; a time segment in this sense can be one audio sample or a sequence of audio samples. In the method, a score is assigned to each data unit, and an accumulated score of all preceding data units back to a reference point in the bitstream is monitored. When the accumulated score reaches a threshold, a signature unit is inserted into the bitstream, wherein the signature unit includes a digital signature of fingerprints of a subsequence (in particular, an uninterrupted subsequence) of the data units back to the reference point, and the reference point is reset. According to said first aspect, the score assigned to a data unit is based on a) a detected content of the time segment of the audio signal corresponding to the data unit, or b) contextual information which relates the time segment to a history of the audio signal, or c) information relating to the conditions of capturing the time segment, or a combination of one or more of these factors.

The method according to the first aspect is suitable for being performed alongside the process of capturing and encoding the audio signal, namely, because the assigning of a score to a data unit can be completed without having to visit the data unit more than once. In other words, the method as such need not be implemented with a lookahead.

Further, the necessary bookkeeping during the execution of the method can be ensured by maintaining a numerical variable representing the accumulated score, which is incremented for each new data unit or each new subsequence of data units, in a runtime memory (score counter).

The method according to the first aspect has the further advantage that the application of the scoring factors a), b), c) lead to a variable signing granularity which is fine in the likely interesting passages of the audio signal and coarser in the remaining, likely eventless passages. Put differently, a higher signing frequency is used in the likely interesting passages of the audio signal and a lower signing frequency in the eventless passages. The "detected content" under factor a) is independent of the notion of (Shannon) information content. For example, an episode of silence - which is generally speaking cheap to encode - may signify an abnormal event in an environment where continuous machinery noise or steadily flowing traffic is the normal condition. The act or refining the signing granularity in the likely interesting passages, which are assigned a relatively high score, also provides robustness if one or more data units are lost during transmission or storage. Because a particular digital signature can be used to validate a subsequence of data units only if all the data units are available, a single missing data unit will destroy the recipient's ability to validate the subsequence; this inability will however be less bothersome the shorter the subsequence is. The proposed method achieves exactly this: in passages of the audio signal with high assigned scores, the digital signatures will on average relate to fewer data units.

Finally, the proposed method is backward-compatible in the sense that a recipient of the signed bitstream can treat it as a conventional signed bitstream. In particular, the deployment of the proposed method does not presuppose any new signaling, control information, coding format or the like for successful validation and playback.

In some embodiments, the score assigned to the data units includes a predefined positive contribution if content (in particular, audio content)of a predefined content type is detected (factor a). The positive contribution is added to other contributions to said score, such as a minimum value $S_O$ of the score. One effect of including the predefined positive contribution is that a data unit where content of the predefined content type is detected will cause the accumulated score to reach the threshold sooner. Different values of the positive contribution may be defined for different content types, and clearly the content types may be selected in view of the use case under consideration.

In some embodiments, the assigned score is based on contextual information which relates the time segment to a history of the audio signal (factor b). The contextual information can be considered to be related to the context in which a particular time segment of the audio signal was captured, e.g., whether the time segment mainly resembles the history of the audio signal, or whether the time segment rather deviates from this history. More precisely, the assigned score includes a positive contribution corresponding to the time segment's deviation from the model. The positive contribution may be constant, or it may vary with the degree (quantity) of deviation from the audio signal's expected behavior in view of the model. The model may be a probabilistic model and said positive contribution is included in the assigned score if the time segment represents a significant deviation from the probabilistic model and/or an anomaly in view of the probabilistic model. In particular, the positive contribution may be a constant, or it may be related to the p-value of observing the deviating audio signal.

In a further development of these embodiments, the adding of the positive contribution is conditional on detecting content of a predefined content type in the time segment that this data unit represents (combination of factors a and b). This could help disregard 'false positives', i.e., such time segments where the audio signal deviates from the model due to content of an irrelevant content type. In another further development, the model is frequency-selective, in the sense that it provides different behaviors of the audio signal in different frequency bands.

In some embodiments, the assigned score is based on information about one or more conditions of capturing the time segment (factor c). Said information may be used to reinforce a basic score that is based on the detected content (factor a) and/or the contextual information (factor b).

On the one hand, the conditions may include a time of day, a direction of incidence on an audio recording device, a geo-position of a mobile audio recording device, or a meteorological condition. This allows system owners to configure the method to produce a finer signing granularity at such times, places and conditions where they expect events of forensic interest to occur, or where such events are at risk of being concealed by wind noise or precipitation noise. Conversely, it allows the system owners to apply a coarser signing granularity when this is deemed justified.

On the other hand, the conditions of capturing the time segment, which influence the assigned score, may include a performance indicator for a network utilized for transferring the bitstream. If the performance indicator drops, a predefined positive contribution is included in the assigned score. The performance indicator can in particular be (an inverse of or negative of) a data loss indicator, such as packet loss rate, frame loss rate, bit error rate, or a frequency of data transmission errors in the network. The performance indicator may alternatively be a general diagnostic of the network, such as latency (e.g., roundtrip time), wherein a temporary worsening of the performance indicator suggests that the risk of data loss is higher than the normal risk. As explained above, the consequences of data losses are more limited if the signing granularity is finer.

In some embodiments, the score assigned to each data unit includes a minimum value $S_0$. This, in combination with a threshold $S_t$, ensures that the digital signature in a signature unit will relate to at most $S_t/S_0$ or $\lceil S_t/S_0 \rceil$ data units. The minimum value $S_0$ may be a predefined constant or it may be related to the size of the data units; the latter option may ensure that the overhead that is devoted to digital signatures to be an approximately constant percentage of the total bitrate in eventless passages of the audio signal.

As explained, the digital signature in a signature unit relates to the fingerprints of a subsequence of data units, which starts from the reference point. The end of the subsequence can simply be the latest data unit to which a score has been assigned, or one data unit earlier. In other embodiments, the end of the subsequence can be located earlier than said latest data unit, at least under some circumstances. In a particular embodiment, the end of the subsequence depends on the rate of change at which the accumulated score reaches the threshold $S_t$: if the threshold is reached at a rate of change in a normal range, the subsequence of signed data units ends where the accumulated score reaches the threshold. Conversely, if the accumulated score reaches the threshold at a rate of change outside the normal range (i.e., faster), the subsequence ends earlier than the data unit at which the accumulated score reaches the threshold. This has the advantage that an eventless period of the audio signal can be severed from an immediately subsequent period of likely forensic interest.

In a second aspect of the present disclosure, there is provided a controller for use in association with an audio capturing device configured to capture an audio signal A, an audio encoder configured to encode the audio signal as a bitstream B, and a signature generator operable to insert signature units into the bitstream. The bitstream includes a sequence of data units representing time segments of the audio signal. The controller has an input interface for monitoring the audio signal and/or the bitstream, an output interface for communicating with the signature generator, a score counter, and processing circuitry configured to assign a score to each data unit based on factor a), b), c) or a combination thereof; to monitor an accumulated score of all preceding data units back to a reference point in the bitstream; to cause the signature generator to insert into the bitstream a signature unit including a digital signature of fingerprints of a subsequence of the data units back to the reference point when the accumulated score reaches a threshold; and to reset the reference point after the signature unit has been inserted.

In a third aspect there is provided a signed bitstream B*, which includes a sequence of data units representing time segments of an audio signal A and signature units, wherein each signature unit includes a digital signature of fingerprints of a subsequence of the data units. All such subsequences of data units have an approximately constant sum of a certain score, which is assigned to a data unit in the bitstream based on a) a detected content of the time segment of the audio signal corresponding to the data unit, or b) contextual information relating the time segment to a history of the audio signal, or c) information which relates to the conditions of capturing the time segment, or a combination of one or more of these factors.

The controller according to the second aspect and the signed bitstream according to the third aspect generally share the effects and advantages of the method according to the first aspect, and they can be implemented with a corresponding degree of technical variation.

The present disclosure further relates to a computer program containing instructions for causing a computer, or the controller in particular, to carry out the above method. The computer program and the signed bitstream may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, on which:

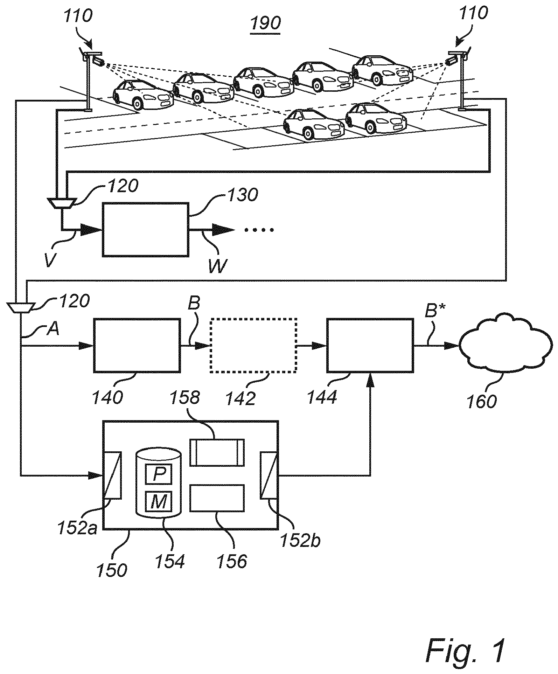

the upper portion of figure 1 shows a site where parallel audio and video recordings are being made;

the lower portion of figure 1 illustrates processing of the resulting video signal V and audio signal A;

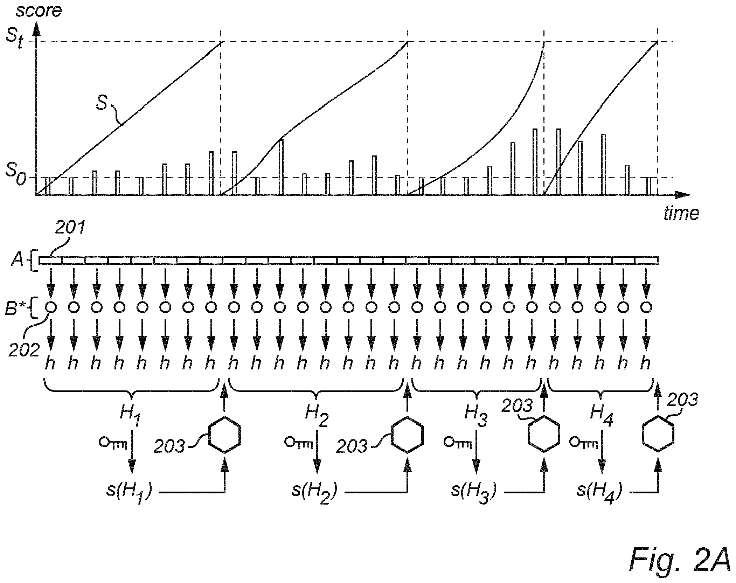

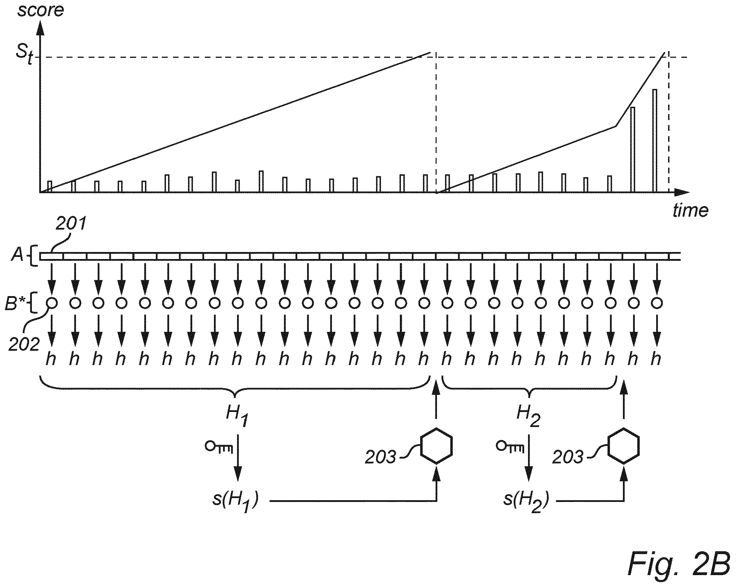

each of figures 2A and 2B shows an audio signal and a bitstream into which signature units are being inserted in accordance with the present disclosure and as guided by a score assigned to consecutive data units; and

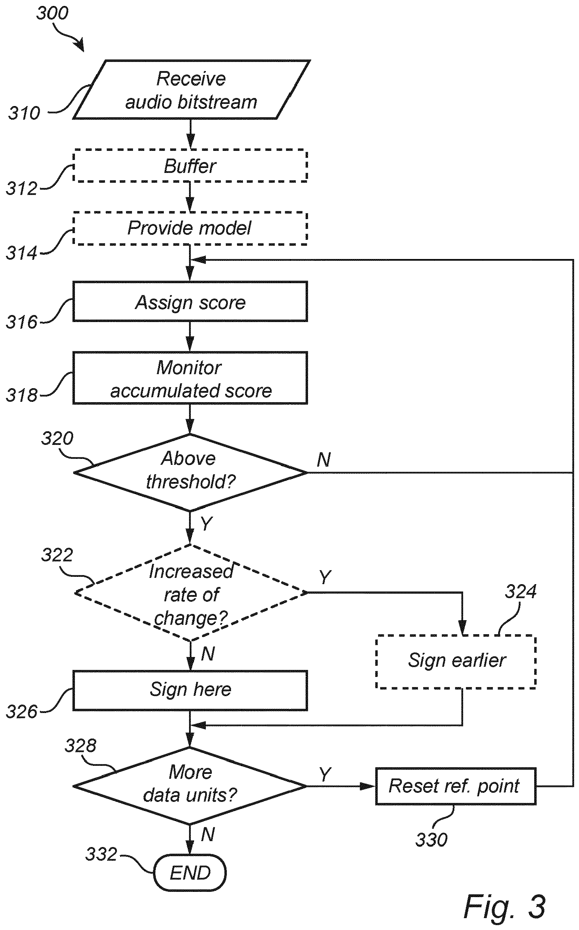

figure 3 is a flowchart of a method for providing a signed bitstream, according to embodiments herein.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### System overview

Figure 1 depicts a site, here exemplified by a parking lot 190 populated with cars, where an audio signal A is being captured by audio recording devices 110 and a video signal V is captured by video recording devices (not shown). It is noted that a suitably equipped digital video camera can be used to capture the audio signal A and video signal V contemporaneously. In the depicted example deployment, multiple audio and video recording devices are in use, and the outputs from these devices are combined by multiplexers 120 into a single audio signal A and a single video signal V each. The use of multiple audio or video recording devices 110 is not an essential feature of the present invention. In figure 1, light line is used to represent flows of audio data, and heavy line is used to represent video data flows.

In the lower portion of figure 1, the beginning of a video processing chain is suggested, including a video encoder 130 which inputs the video signal V and outputs a video bitstream W.

Further down, it is seen that one copy of the audio signal A is fed to an audio encoder 140 that outputs an audio bitstream B, the structure of which will be described below. The bitstream B is provided with signature units by a signature generator 144, whose output will be referred to as a signed bitstream B*. The signed bitstream B* may be deposited in a volatile or non-volatile memory, or it may, as shown in figure 1, be transferred to a recipient or memory over a network 160. The signed bitstream B* with audio data can be combined with the video bitstream W (after optional additional processing) into a common bitstream format.

The signature generator 144 may include a cryptographic element (not shown) with a pre-stored private key. The recipient of the signed audio bitstream B* may be supposed to hold a public key belonging to the same key pair, which enables the recipient to verify that the signature produced by the cryptographic element is authentic (but generally not to generate new signatures). Alternatively, the public key could be included as metadata in the signed audio bitstream B*, in which case it is not necessary to store it at the recipient side in advance.

Optionally, to support such embodiments which require a nonzero lookahead, the signature generator 144 is preceded by a buffer 142. The buffer 142 makes it possible to postpone or, metaphorically speaking, delay the insertion of a signature unit by one or more data units in the sequence. For example, with the buffer 142 it becomes possible to insert a signature unit which contains a digital signature of fingerprints of a subsequence of data units that ends earlier than the latest processed data unit. The structure depicted in figure 1 is functional if the buffer 142 is configured to temporarily store data units, so that it is possible to delay the feeding of these data units to the signature generator 144, which calculates fingerprints and signs these. The same effect of delaying the insertion of a signature unit by one or more data units can be achieved by a buffer for fingerprints which is located at or in the signature generator 144. More precisely, the fingerprint buffer can be arranged downstream of a fingerprinting section (not shown) of the signature generator 144 and upstream of a signing section (not shown). When it is decided to insert a signature unit, the buffered fingerprints are fed to the signing section and a signature unit is generated. (It is noted that, when a fingerprint buffer is used, it may not be possible to insert the signature unit immediately after the last signed data unit, but the signature unit may have to be inserted with a delay or 'out of band'.)

Another copy of the audio signal A is fed to a controller 150 arranged to control the signature generator 144. In general terms, the controller 150 is arranged to control the signature generator 144; at least, the controller 150 can control the start and end of each subsequence of data units to which an inserted signature unit relates. In some implementations, the controller's 150 control of the signature generator 144 may be provided in the form of a signal or message representing a command to insert a signature unit as soon as possible. Alternatively, the control is more fine-grained in that it identifies the data units which constitute the beginning and end of a subsequence for which the signature generator 144 is to form a new signature unit, which is to be inserted into the bitstream B.

The controller 150 may have any suitable structure for the described purpose. For example, it may include the following functional components: a first data interface (used as input interface) 152a for monitoring the audio signal A and/or the bitstream B, a second data interface (used as output interface) 152b towards the signature generator 144, a score counter 158, memory 154 and processing circuitry 156. The processing circuitry 156 is configured to perform the method 300 which will be described below with reference to the flowchart in figure 3. The memory 154 may store a computer program P with instructions for performing the method 300. During the performance of the method 300, the score counter 158 may be used for bookkeeping of the accumulated score. The memory 154 may further be utilized for storing a model M of the history of the audio signal. The functional components may correspond to respective physical components, or multiple functions may be implemented in a common physical component, e.g., a combined input and output interface.

The central portion of figure 2A symbolizes an audio signal A partitioned into sequential time segments 201, which are encoded as data units 202 according to a lossy or lossless encoding process. The time segments 201 may correspond to a single sample (per audio channel) or multiple audio samples. In the case of a single sample, the duration of the time segment 201 be defined as the inverse of the sampling frequency. In the embodiment illustrated in figure 2A, the time segments 201 and data units 202 are in a one-to-one relationship; in other embodiments, a one-to-many or many-to-one relationship may apply, and this relationship may vary dynamically. The sequence data of units 202 may be said to form a bitstream, and the bitstream can be decoded into a reconstructed audio signal. If lossy encoding has been used, the reconstructed audio signal will have minor defects in relation to the original audio signal A. In addition to the data units 202, the bitstream may contain metadata, including technical information (self-synchronization, synchronization with a video signal, decoding guidance etc.) or human-readable information (date and place of recording, annotations etc.) or both. The metadata may be carried in separate bitstream units on a par with the data units 202, or the metadata may be inserted into some of the data units 202.

In different embodiments, the bitstream is in accordance with different lossy or lossless audio coding formats, including various transform-based coding formats and formats based on the modified discrete cosine transform (MDCT) in particular. Also speech coding formats may be used to encode the time segments 201. For example, the bitstream may be in the Advanced Audio Coding format (AAC, or MPEG-2/MPEG-4; specified in ISO/IEC 13818-7, ISO/IEC 14496-3) or in the Opus audio format (specified in RFC 6716 with later updates). In the specific example of AAC, the data blocks single channel element (SCE), channel pair element (CPE), coupling channel element (CCE), lfe channel element (LFE) are defined, and any associated metadata may be conveyed in any of a data stream element (DSE), a program config element (PCE) and a fill element (FIL). The DSE may be composed of a DSE ID, an element instance tag, a data byte align flag, a count, an optional ESC, and a series of data stream bytes. For the DSE, the AAC standard specifies the length and interpretation of the DSE ID, an element instance tag, the databyte align flag, the count and the ESC, but not the interpretation of the data stream bytes.

The data units 202 may correspond to access units in some audio coding formats. In other formats, the data units 202 may be audio packets comprising a number of so-called frames, wherein a frame contains an audio sample for each channel of a spatially and/or spectrally defined set of channels. An audio packet in this sense may correspond to a segment of the audio signal A of a predefined duration, such as 10 ms. It is noted that the data units in the present disclosure are generally distinct from the packets specified in the Real Time Protocol (RTP), as regards their structure and/or use.

When signature units 203 are added to said bitstream, a signed bitstream B* is obtained. In the signed bitstream B*, each data unit 202 is associated with a signature unit 203, so that its authenticity may be verified by a recipient. Without departing from the scope of the present disclosure, the signed bitstream B* may contain some amount of data units 202, which are 'unsigned' in the sense of not being associated with any signature unit 203. This could still, at least in some use cases, provide a reasonable level of data security.

The concept of signing granularity has been introduced above. One of its implications is that it may not be possible to verify the authenticity of each data unit 202 separately; rather, the recipient may have to verify the authenticity of a complete subsequence of data units which are associated with a particular signature unit 203. A positive outcome of such an authenticity verification (or validation) is to be interpreted such that all data units 202 in the subsequence are authentic. A negative outcome signifies that one or more of the data units 202 is unauthentic, e.g., as a result of a coding error, transmission error, tampering or the like. The subsequence, or the full signed bitstream B*, may then be quarantined from any further use or processing.

To provide the signature units 203, the signature generator 144 initially computes a fingerprint h from each data unit 202. Although, for the simplicity of this presentation, the same notation h is used for all fingerprints, it is understood that the fingerprint depends on the content of the corresponding data unit 202. Each of the fingerprints h may be a hash or a salted hash. A salted hash may be a hash of a combination of the data unit (or a portion of the data unit) and a cryptographic salt; the presence of the salt may stop an unauthorized party who has access to multiple hashes from guessing what hash function is being used. Potentially useful cryptographic salts include a value of an active internal counter, a random number, and a time and place of signing. The hashes h may be generated by a hash function (or one-way function), which is a cryptographic function that provides a safety level considered adequate in view of the sensitivity of the video data to be signed and/or in view of the value that would be at stake if the video data was manipulated by an unauthorized party. Three examples are SHA-256, SHA3-512 and RSA-1024. The hash function shall be predefined; in particular, the hash function may be reproducible, so that the fingerprints can be regenerated when the recipient is going to validate the signed bitstream B* using the signature units 203.

From the fingerprints h of the subsequence of data units 202, designated by the leftmost horizontal curly bracket, the signature generator 144 forms a bitstring H1 and generates a digital signature s(H1) of the bitstring using the cryptographic element. This is schematically illustrated in the lower portion of figure 2A. The bitstring H1 from which the digital signature is formed may be a combination of fingerprints of the associated data units 102, or it may be a fingerprint of said combination of fingerprints of the associated data units 102. The combination of the fingerprints (or 'document') may be a list or another linear or scrambled concatenation of string representations of the fingerprints. Alternatively, the fingerprints may be linked, to enable detection of unauthorized deleting, adding or reordering of data units. In such embodiments, the bitstring H1 may be a recursively computed hash of the last data unit in the subsequence, which due to the recursiveness has a dependence on the preceding data units (or on the fingerprints of the preceding data units). In addition to the digital signature s(H1), it is optional for the signature unit 203 to include also the bitstring H1 ('document approach'), which may be generated in any of the ways outlined above. It is understood that the signature generator 144 processes the second, third, fourth etc. subsequences of data units 202 in a manner analogous to the first one, so as to provide signature units 203 for these.

A recipient of the signed bitstream B* will be able to use the signature units 203 to validate the authenticity of the corresponding segments, provided the recipient has access to the public key in the key pair utilized by the signature generator 144. The main steps of the validation are the following: the recipient computes fingerprints $\bar{h}$ of the data units 202 in the received signed bitstream B* using an identically defined one-way function, forms a bitstring (e.g., $\overline{H1}$) of the fingerprints, and then supplies the digital signature s(H1) read from the signature unit 203 and the bitstring to a cryptographic element containing the public key. A favorable outcome corresponds to successful validation. Alternatively, if the signature unit 203 includes the bitstring H1 in addition to the digital signature s(H1) ('document approach'), the recipient can choose to first validate the received bitstring H1 with respect to the received digital signature s(H1) using the cryptographic element, and then assess whether the received bitstring H1 matches the bitstring $\overline{H1}$ which was formed on the basis of the fingerprints $\bar{h}$ of the data units 202 in the received signed bitstream B*.

**Signing method - basic embodiment**

The upper portion of figure 2A illustrates the assigning of scores to the data units within a novel method 300 proposed by the inventors, and the evolution of the accumulated score over time. The method 300 has been conceived to provide a signed bitstream B* with a variable signing granularity, with a view to particular technical applications of video monitoring with concurrent recording of audio. The method 300 maybe implemented in a general-purpose processor that is authorized to control the insertion of signature units 203 into an audio bitstream. For the purposes of the following description, it will be assumed that the processor executing the method 300 is included in a dedicated functional component, such as the controller 150 illustrated in figure 1, which is arranged to control the signature generator 144.

In a first step 310, controller 150 receives an audio bitstream B representing and audio signal A or it receives the unencoded audio signal A. It is noted that the method 300 maybe executed alongside the capturing (acquisition) of an audio signal A and the encoding of the audio signal A as an audio bitstream B and in a real-time relationship with this. In one possible workflow, the controller 150 receives the audio bitstream and outputs the signed bitstream B*. Alternatively, as shown in figure 1, the controller 150 is arranged outside the main audio processing chain and continuously reads a copy of the audio signal A. In another implementation of step 310, the controller 150 reads a copy of the audio bitstream B.

In the next step 316 of the present embodiment, the controller 150 assigns scores to the data units 202 in the bitstream B. Reference is made to the upper portion of figure 2A, where the hollow vertical bar above each data unit 202 represents the score which has been assigned to it. It is understood that this assigning may, in implementations where the controller 150 has access to the audio signal A but not the bitstream B, imply that the scores are assigned on the basis of the time segments 201, which are in a well-defined relationship to the data units 202. Further, step 316 may be implemented such that a group of multiple data units 202 (or multiple time segments 201 which are proxies for the data units 202) are considered together, after which identical or individual score values are assigned to all of these. In different embodiments of the method 300, the controller 150 assigns the score to a data unit 202 based on

a) a detected content of the time segment of the audio signal corresponding to the data unit, or

b) contextual information relating the time segment to a history of the audio signal, or

c) information relating to the conditions of capturing the time segment,

or a combination of one or more of these factors. The assigned score may as well include a contribution representing manual input, e.g., from an operator who occasionally listens to sound at the site 190 where the audio recording takes place and wishes to make sure that the ongoing events are captured with the benefits of fine signing granularity. Furthermore, the manual input may be given via a body-worn camera (BWC) carried by security staff. The scoring factors will be described in a dedicated section of this disclosure.

Further, in steps 318 and 320 of the method 300, an accumulated score for all data units 202 back to a reference point is monitored and compared with a threshold $S_t$. For this purpose, the controller 150 may use the score counter 158. In the upper portion of figure 2A, a trend of the accumulated score S has been plotted as a function of time in solid line. It is seen that for the first subsequence (eight data units 202), the accumulated score S grows at an approximately constant rate, whereas the S curves have different shapes for the second subsequence (eight data units), third subsequence (six data units) and fourth subsequence (five data units 202). The illustration refers to an embodiment where the score includes a minimum value $S_0$ approximately equal to an eighth of the threshold value $S_t$. It is noted that in realistic implementations of the method 300, the number of data units 202 to be signed by one signature unit 203 may be significantly higher than these example numbers five, six and eight.

The accumulated score is a sum of the scores of the data units 202 back to the reference point. In the first execution of the method 300, the reference point may be the first data unit 202 of the observed portion of the bitstream B, so that the accumulated score S represents a complete history of the bitstream B. When it has been decided to insert into the bitstream B (step 324 or 326, to be described below) a signature unit 203 with a digital signature (e.g., s(H1)) of fingerprints h of a subsequence of the data units 202, the reference point will normally be moved (step 330) to the data unit following immediately after the end of that subsequence.

If the comparison in step 320 reveals that the score threshold $S_t$ is now reached by the accumulated score for a subsequence of the data units 202 from an initial data unit (the reference point) up to and including a final data unit, then one possible outcome is a decision to sign the bitstream B here. If the score assigned to an $n$th data unit 202 is denoted by $s_n$, and the sequence numbers of the initial and final data units 202 are denoted by $n_i$, $n_f$, the accumulated score satisfies

$$\sum_{n=n_i}^{n_f} s_n \geq S_t \qquad\qquad (1)$$

Further, it is normally true (though not necessarily in all embodiments) that the accumulated score is less than the threshold immediately before the final data unit:

$$\sum_{n=n_i}^{n_f-1} s_n < S_t \qquad\qquad (2)$$

Inequality (2) may be said to represent a minimality condition.

Signing "here" signifies that the signature unit 203 to be inserted into the bitstream B includes a digital signature of fingerprints h of the subsequence from the initial to the final data unit; the digital signature may be generated directly from said fingerprints h or, as explained above, from a bitstring (e.g., H1) formed from the fingerprints h. In uncomplicated implementations, this can be achieved without buffering any part of the audio bitstream; only the computed fingerprints of the data units 202 may need to be temporarily stored until the signature unit 203 is generated. The computed fingerprints of the data units 202 may be stored in a runtime memory (not shown) in the signature generator 144. The signature unit 203 can be inserted into the bitstream B in a metadata-type bitstream unit. Alternatively, the signature unit 203 can constitute a part of a data unit 202 (e.g., DSE in the case of the AAC format) or it can be merged with the data unit 202.

To achieve the aimed-for signing granularity, the content of the inserted signature unit 203 is relevant but not necessarily its position in the bitstream. In particular, even if the signature unit 203 relates to a subsequence extending up to a specific final data unit, the signature unit can be inserted into the bitstream several data units later. Such separation of the signature unit 203 and the sequence of data units 202 that it signs may be necessary due to processing latencies, e.g., a regular delay in computing the score to be assigned to the latest data unit. Accepting a separation of the signature unit 203 may also contribute to a smoother signing process that does not introduce jitter when processing delays occur. However, the separation does not necessarily cause any significant inconvenience at the recipient side, as the signature unit 203 is still located sensibly in the same part of the signed bitstream B*, i.e., one which has already been loaded into a runtime memory. In such embodiments where the signature unit 203 is inserted into the bitstream a variable number of data units later, the signature unit 203 should preferably contain information indicating how many data units 202 it is associated with, or otherwise information from which the initial and final data units of the signed subsequence can be deduced; the availability of such information will assist the validation process as the recipient side.

A still further option would be to insert the signature unit 203 'out of band', in the sense that the signed bitstream B* has one channel for the data units 202 and a separate (or independent) channel for the signature units 203. Under this option, the meaning of signing "here" is understood to refer to the content of a signature unit 203, i.e., the fact that its digital signature relates to the fingerprints of a certain subsequence of the data units 202. The position of the signature unit 203 relative to the subsequence of the data units 202, however, may not be well-defined since these units are conveyed on different channels of the signed bitstream B*.

If the audio bitstream B is continuing after the new signature unit 203 has been inserted, as ascertained in decision point 328, the execution flow of the method 300 moves to a step 330 of resetting the reference point. It then loops back to step 316, where a score is assigned to the next data unit 202 in turn. In step 330, the reference point is moved to the ($n_f$ + 1)th data unit, i.e., the one following after the end of the most recently signed subsequence. Normally the reference point remains stationary during an execution of the method 300 except in step 330. In such implementations where it is desired to have an overlap between consecutive signed subsequences of data units (this could protect against unauthorized reordering of the subsequences), the reference point is instead moved to the $n_f$'th data unit in step 330. The $n_f$'th data unit is the endpoint of the earlier subsequence and the starting point of the later subsequence.

Otherwise, if the bitstream B has stopped, the execution flow ends (position 332). Then, the last data units 202 may remain not associated with any signature unit (unsigned) unless they are processed specifically.

**Signing method - further developments**

In one further development, the present method 300 may include a step 312 of buffering a most recent portion of the received audio bitstream. The buffer 142 may be located upstream of the signature generator 144. The buffering may go on throughout the execution of the method 300. The buffering may for example facilitate the signing of a subsequence which starts at the reference point (in the terminology used above, this is the initial data unit, with sequence number $n_i$) but ends earlier than the data unit whose contribution causes the accumulated score $S$ to reach or cross the threshold $S_t$ (final data unit, sequence number $n_f$). For example, a signature unit 203 maybe inserted which includes a digital signature of fingerprints of the $n_i$th through ($n_f$ - $d$)th data units 202, where $d$ is a positive integer. This will be referred to as signing "earlier", as opposed to signing "here".

The option of signing the bitstream "earlier" can be used for the purpose of separating an eventless period of the audio signal from a following period of likely forensic interest. In some embodiments where this is practiced, the method 300 further comprises a decision point 322 of assessing whether the rate of change at which the accumulated score $S$ reaches the threshold $S_t$ is in a normal range ($S'(n) \leq r_0$) or is increased relative to the normal range ($S'(n) > r_0$). In other embodiments, a relative criterion may be evaluated at the decision point 322, namely, whether the rate of change has increased relative to the recent past, e.g., whether

$$S'(n) > (1 + \delta) \times S'(n - q)$$

for some constant $\delta > 0$ and constant integer $q \geq 1$. Either way, the rate of change $S'(n)$ may be estimated as a moving average, such as the steepness of a straight line fitted to the scores of the $p > 0$ most recent data units, i.e., those which carry sequence numbers $n - p + 1$, $n - p + 2$, ... , $n - 1$, $n$. In very simple implementations, the rate of change $S'(n)$ may be estimated as the difference $s_n - s_{n-1}$ or $s_n - s_{n-p+1}$, with $p > 0$ as above.

If it is found in decision point 322 that the rate of change is in the normal range, the sign "here" option is chosen (step 326), wherein the subsequence of signed data units ends where the accumulated score reaches the threshold. In the opposite case, the sign "earlier" option is chosen (step 324), wherein the subsequence ends $d$ units earlier than the data unit at which the accumulated score is found to reach the threshold $S_t$. The integer $d > 0$ can be determined in at least two different ways. A simple way is to use a constant value of $d$. A more sophisticated way is to set $d$ equal to a multiple of the rate of change at the point of reaching or crossing the threshold, that is, by rounding $\gamma \times S'(n_f)$ or $\gamma \times (S'(n_f) - r_0)$, for some constant $\gamma > 0$, to an integer. In other use cases, it may be more suitable to relate the number $d$ to the inverse of the rate of change at the point of reaching or crossing the threshold; this way, the eventless period will end earlier if the transition into the likely interesting period is smoother. Further still, the number $d$ may be determined in such manner that the data unit, at which the accumulated score $S(n)$ starts to increase at a higher rate, shall be associated with the later signature unit. This data unit can be located by studying a numerical approximation of the second derivative $S''(n)$ of the accumulated score.

Reference is made to figure 2B, which illustrates a possible effect of this embodiment. Here, the accumulated score reaches the threshold $S_t$ at a rate of change in the normal range (less than $r_0$) for the first subsequence of seventeen data units 202. Towards the end of the second subsequence, however, the accumulated score grows fast, so that the criterion in decision point 322 evaluates positive; the signing is applied to the fingerprints of just eight data units, even though the threshold was in fact reached after ten data units, i.e., $d = 2$ data units later. As a result, the end of the relatively eventless period, where low scores were assigned, will be signed by the second signature unit 203, whereas the two most recent data units 202 will be signed by a third signature unit (not shown). This allows the recipient of the bitstream to play or edit the two most recent data units 202 separately from the eventless period, as explained above, and also increases the robustness of these data units 202 to data losses. For playback, there is no need to decode the eventless period. For editing followed by re-signing, the eventless period can be left intact. Clearly, after the controller 150 has ordered the insertion of the second signature unit 203, it will reset the reference point at the second last data unit 202, so that the scores of the two data units 202 will be included in a new accumulated score. In other words, the reference point is moved to the ($n_f$ - $d$ + 1)th data unit, i.e., the one following after the end of the most recently signed subsequence. (As explained above, if consecutive pairs of the signed subsequences of data units are to overlap, the reference point should instead be moved to the ($n_f$ - $d$)th data unit.)

In another further development, the present method 300 may include a step 314 of providing a model M of the history of the audio signal A, which will be used in step 316 to facilitate the scoring of the data units 202. It is noted that the model M may be provided by analyzing an earlier portion of the same audio signal A that is being processed, e.g., an audio signal A represented by the same bitstream B. The model M can be a model of the background sounds in the captured audio signal A; this may be achieved by eliminating any segments that contain audible events (e.g., events of likely forensic interest, events likely to be assigned high scores) that do not form part of the background sounds before analyzing the audio signal A. It is appreciated that the history of the audio signal A can equivalently be represented by a different audio signal captured under comparable circumstances, e.g., by a similarly situated recording equipment, although technically that audio signal is managed as a separate audio file or a separate audio database item. It is furthermore appreciated that the model M can either be constant for the duration of an execution of the method 300, or it can undergo updates or further refinement while the method 300 is being executed.

The model M may be non-parametric or parametric. A non-parametric audio signal model can for example be a spectrogram, e.g., a metric of the historic signal-energy distribution over different frequency bands. In particular, the spectrogram may refer to historic signal-energy minima for the different frequency bands; this could eliminate any contributions representing events that do not form part of the background sounds. A parametric audio signal model can for example be a Gaussian Mixture Model (GMM), for which the statistical characteristics are defined by a set of parameters, such as mean values, standard deviations and weights. These parameters, if not *a priori* known, are estimated over the history to enable the assessment of the normality of more recent segments of the audio signal A.

In some embodiments, the model M is provided 314 only on the basis of a particular frequency band, e.g. one which a system owner expects to be most helpful for identifying passages of forensic interest in the audio signal A. If such a frequency-selective (or frequency-restricted) model M is used, a score may be assigned to a data unit 202 by listening only to the same frequency band of the corresponding time segment 201 of the audio signal.

**Scoring in the signing method**

In some embodiments of the method 300, the score assigned to the data units includes a predefined positive contribution if content of a predefined content type is detected (scoring factor a). The positive contribution is added to other contributions to said score, such as the minimum value $S_O$ of the score exemplified above. Different values of the positive contribution may be defined for different content types. In an example use case related to surveillance (including audio monitoring), where events of likely forensic significance are considered interesting, there may be detection of the following content types: voice activity, speech, screams, silence, bell of a striking clock (which is potentially useful of for proving an alleged time and location of the audio recording), noise from mechanical destruction (glass breaking, metal drilling, sawing), noise from a particular vehicle maneuver (hard acceleration, braking, squeaking tires etc.), noise from firearms etc. The detection may use per se known audio analytic technology, in which the content types may correspond to so-called analytic classes. (See for example Salamon & Bello, "Deep Convolutional Neural Networks and Data Augmentation for Environmental Sound Classification," preprint, arXiv:1608.04363, DOI: 10.48550/arXiv.1608.04363 and Kons & Toledo-Ronen, "Audio event classification using deep neural networks", Proceedings of the Annual Conference of the International Speech Communication Association, INTERSPEECH, 2013, pp. 1482-1486, DOI: 10.21437/Interspeech.2013-384.) The greatest benefit of detecting audio content in this way is obtained for content types which have acoustic features that are easy to recognize and easy to tell apart from uninteresting audio content. Notably this is the case when the content type has a distinctive definable acoustic signature, and/or when a machine-learning model has been successfully trained to perform such recognition.

In some embodiments, additionally or alternatively, the assigned score is based on contextual information which relates the time segment to a history of the audio signal (factor b). More precisely, the assigned score includes a positive contribution corresponding to the time segment's deviation from a model M of the history of the audio signal and/or to what extent the time segment represents an anomaly in view of the model M. As described above, the model M may be provided in the form of a probabilistic or deterministic model. Further, the model M may be parametric or non-parametric.

The positive contribution in the assigned score may be constant, or it may vary with the degree (amount) of deviation from the audio signal's expected behavior in view of the model. To determine the deviation in the simple case where the model M is a spectrogram represented as a vector

$$P^{(M)} = \left( P_1^{(M)}, P_2^{(M)}, \dots, P_m^{(M)} \right),$$

where $P_j^{(M)}(t)$ is the historic minimal power of a *j*th frequency band from a total of *m* frequency bands, the controller 150 may estimate a spectrogram

$$P(n) = \left( P_1(n), P_2(n), \dots, P_m(n) \right)$$

for an nth data unit 202 and evaluate the magnitude of the difference of the model spectrogram and the estimated spectrogram, $P^{(M)} - P(n)$. For example, the magnitude may be estimated as a *p*-norm of the difference vector, $\|P^{(M)} - P(n)\|_p$ for some $p \geq 1$, and the positive contribution to the assigned score may be proportional to the value of this *p*-norm. If instead the option of using a constant positive contribution is chosen, this positive contribution may be added as soon as the magnitude of the difference of the model spectrogram and the estimated spectrogram exceeds a preconfigured threshold.

When a probabilistic model is used, the positive contribution to the score to be assigned to data unit 202 may correspond quantitatively to the corresponding time segment's 201 deviation from the probabilistic model M. More precisely, if in view of the model M the observation of a content $\omega$ in that time segment 201 has a probability of $Pr(\omega)$, then the deviation from said model can be meaningfully quantified as a positive multiple of - $\log Pr(\omega)$. The number - $\log Pr(\omega)$ can thus be used as contextual information, that is, as the basis for determining the positive contribution to the assigned score. In a further example, the positive contribution to the assigned score is related to the entropy of a residual after prediction of the new time segment 201 using the model M. In a still further example, the positive contribution is included in the assigned score if the time segment represents a significant deviation from the probabilistic model and/or an anomaly in view of the probabilistic model. The deviation may for example be considered significant if $Pr(\omega) < \alpha$, where $\alpha$ is the significance level, e.g. $\alpha = 0.05$. The positive contribution which is assigned to a time segment with a significant deviation may be a constant, or it may be inversely related to the p-value $Pr(\omega)$ of observing the new time segment 201.

As explained above, the adding of the positive contribution is conditional on detecting content of a predefined content type in the time segment that this data unit represents (combination of factors a and b). This may be described as assigning the score based on a sort of 'qualified' Shannon information content.

As also explained above, the model M may be restricted to a particular frequency band, and the assigning of the score to a data unit 202 may be based on an analysis of only the same frequency band of the corresponding time segment 201 of the audio signal.

In some embodiments, the assigned score is based on information about one or more conditions of capturing the time segment (factor c). Said information may be used to reinforce a basic score that is based on the detected content (factor a) and/or the contextual information (factor b). The reinforcing may be achieved by scaling the contribution from factor a) and/or factor b) by a value of factor c).

On the one hand, the conditions of capturing the time segment may include a time of day, a direction of incidence on an audio recording device 110, a geo-position of a mobile audio recording device, or a meteorological condition. The direction of incidence, or angle of arrival, can be determined from phase measurements made by a multi-microphone array. Concerning time of day, it may for example be hypothesized that audio observations collected at times when a building is normally empty are a priori of forensic interest and should be assigned higher scores.

On the other hand, the conditions of capturing the time segment, which influence the assigned score, may include a performance indicator for a network 160 (figure 1) utilized for transferring the signed bitstream B*. If this performance indicator drops temporarily, a predefined positive contribution is included in the assigned score. The performance indicator can in particular be (an inverse of or negative of) a data loss indicator, such as packet loss rate, frame loss rate, bit error rate, or a frequency of data transmission errors in the network 160. The performance indicator may alternatively be a general diagnostic of the network 160, such as latency (e.g., roundtrip time), wherein a temporary worsening of the performance indicator may indirectly suggest that the risk of data loss is higher than the risk prevailing during normal operation of this network 160. Indeed, the consequences of data losses can often be reduced by using a finer signing granularity, and this is achieved by temporarily increasing the scores assigned to the data units 202.

In addition to the contributions from these factors a), b) and c), the assigned score may include a minimum value $S_0$ per frame. The minimum value $S_0$, if set to a constant value, ensures that the separation of two consecutive signature units does not exceed a certain number of data units. If instead the minimum value $S_0$ is set proportional to a size of the data unit, it is made sure that at least a certain percentage of the bitrate is devoted to the digital signatures.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1.    A method (300) of providing a signed bitstream (B*), to be performed in association with a process where an audio signal (A) is captured and encoded as a bitstream (B),

   wherein the bitstream includes a sequence of data units (202) representing time segments (201) of the audio signal,
   the method comprising:

      assigning (316) a score to each data unit;
      monitoring (318) an accumulated score of all preceding data units back to a reference point in the bitstream;
      when the accumulated score reaches a threshold ($S_t$), inserting (326) into the bitstream a signature unit (203) including a digital signature (s(H1), s(H2), ...) of fingerprints (h) of a subsequence of the data units back to the reference point; and

resetting (330) the reference point,
wherein the score assigned to a data unit is based on at least one of:

> a) a detected content of the time segment of the audio signal corresponding to the data unit,
> b) contextual information which relates the time segment to a history of the audio signal,
> c) information relating to the conditions of capturing the time segment.

**2.** The method of claim 1, wherein the assigned score includes a predefined positive contribution if content of a predefined content type is detected.

**3.** The method of claim 2, where the predefined content type is one or more of:
voice activity, speech, screams, silence, noise from mechanical destruction, noise from a particular vehicle maneuver, noise from firearms.

**4.** The method of any of the preceding claims, further comprising:

> providing (314) a model of the history of the audio signal,
> wherein the assigned score includes a positive contribution corresponding to the time segment's deviation from the model.

**5.** The method of claim 4, wherein:

> the model is a probabilistic model; and
> the positive contribution is included in the assigned score if the time segment represents a significant deviation and/or an anomaly in view of the probabilistic model.

**6.** The method of claim 4 or 5, wherein positive contribution is included in the assigned score for a deviating time segment only if content of a predefined content type is detected in that time segment.

**7.** The method of any of claims 4 to 6, wherein the model is frequency-selective.

**8.** The method of any of the preceding claims, wherein the assigned score is based on one or more of the following conditions of capturing the time segment:
a time of day, a direction of incidence on an audio recording device (110), a geo-position of a mobile audio recording device, a meteorological condition.

**9.** The method of any of the preceding claims, wherein:

> the assigned score is based on information relating to the conditions of capturing the time segment, said information including a performance indicator for a network (160) utilized for transferring the bitstream; and
> the assigned score includes a positive contribution corresponding to a temporary drop in the performance indicator.

**10.** The method of claim 8 or 9, wherein said information relating to the conditions of capturing the time segment is used to reinforce a basic score that is based on said detected content and/or contextual information.

**11.** The method of any of the preceding claims, wherein the score assigned to a data unit includes a minimum value ($S_0$).

**12.** The method of any of the preceding claims, wherein the signature unit to be inserted (326) into the bitstream includes a digital signature of fingerprints which pertain

> - to a subsequence of data units which ends earlier than the accumulated score reaches the threshold, if the threshold is reached at an increased rate of change;
> - to a subsequence of data units which ends where the accumulated score reaches the threshold, otherwise.

**13.** The method of any of the preceding claims, which is performed in real time relative to said audio capturing and encoding process.

**14.** A controller (150) for use in association with:

an audio capturing device (110) configured to capture an audio signal (A);
an audio encoder (140) configured to encode the audio signal as a bitstream (B); and
a signature generator (144) operable to insert signature units (203) into the bitstream,
wherein the controller comprises:

an input interface (152a) for monitoring the audio signal and/or the bitstream;
an output interface (152b) towards the signature generator;
a score counter (158); and
processing circuitry (156) configured to perform the method of any of the preceding claims.

**15.** A computer program (P) comprising instructions to cause the controller of claim 14 to execute the steps of the method of any of the preceding claims.

**Amended claims in accordance with Rule 137(2) EPC.**

**1.** A method (300) of providing a signed bitstream (B*), to be performed in association with a process where an audio signal (A) is captured and encoded as a bitstream (B),

wherein the bitstream includes a sequence of data units (202) representing time segments (201) of the audio signal,
the method comprising:

assigning (316) a score to each data unit;
monitoring (318) an accumulated score, which is a sum of the scores assigned to all preceding data units back to a reference point in the bitstream;
when the accumulated score reaches a threshold ($S_t$), performing the steps of:

inserting (326) into the bitstream a signature unit (203) including a cryptographic digital signature (s(H1), s(H2), ...) of fingerprints (h) of a subsequence of the data units back to the reference point; and
resetting (330) the reference point,

wherein the score assigned to a data unit is based on at least one of:

a) a detected content of the time segment of the audio signal corresponding to the data unit,
b) contextual information which relates the time segment to a history of the audio signal, wherein the assigned score includes a positive contribution corresponding to the time segment's deviation from a model of the history of the audio signal,
c) information relating to the conditions of capturing the time segment.

**2.** The method of claim 1, wherein the assigned score includes a predefined positive contribution if content of a predefined content type is detected.

**3.** The method of claim 2, where the predefined content type is one or more of:
voice activity, speech, screams, silence, noise from mechanical destruction, noise from a particular vehicle maneuver, noise from firearms.

**4.** The method of any of the preceding claims,
wherein:

the model is a probabilistic model; and
the positive contribution is included in the assigned score if the time segment represents a significant deviation and/or an anomaly in view of the probabilistic model.

**5.** The method of claim 4, wherein the positive contribution is included in the assigned score for a deviating time segment only if content of a predefined content type is detected in that time segment.

**6.** The method of any of claims 4 to 5, wherein the model is frequency-selective.

**7.** The method of any of the preceding claims, wherein the assigned score is based on one or more of the following conditions of capturing the time segment:
a time of day, a direction of incidence on an audio recording device (110), a geo-position of a mobile audio recording device, a meteorological condition.

**8.** The method of any of the preceding claims, wherein:

the assigned score is based on information relating to the conditions of capturing the time segment, said information including a performance indicator for a network (160) utilized for transferring the bitstream; and
the assigned score includes a positive contribution corresponding to a temporary drop in the performance indicator.

**9.** The method of claim 7 or 8, wherein said information relating to the conditions of capturing the time segment is used to reinforce a basic score that is based on said detected content and/or contextual information.

**10.** The method of any of the preceding claims, wherein the score assigned to a data unit includes a minimum value ($S_0$).

**11.** The method of any of the preceding claims, wherein the signature unit to be inserted (326) into the bitstream includes a digital signature of fingerprints which pertain

- to a subsequence of data units which ends earlier than the accumulated score reaches the threshold, if the threshold is reached at an increased rate of change;
- to a subsequence of data units which ends where the accumulated score reaches the threshold, otherwise.

**12.** The method of any of the preceding claims, which is performed in real time relative to said audio capturing and encoding process.

**13.** A controller (150) for use in association with:

an audio capturing device (110) configured to capture an audio signal (A);
an audio encoder (140) configured to encode the audio signal as a bitstream (B); and
a signature generator (144) operable to insert signature units (203) into the bitstream,
wherein the controller comprises:

an input interface (152a) for monitoring the audio signal and/or the bitstream;
an output interface (152b) towards the signature generator;
a score counter (158); and
processing circuitry (156) configured to perform the method of any of the preceding claims.

**14.** A computer program (P) comprising instructions to cause the controller of claim 13 to execute the steps of the method of any of the preceding claims.

*Fig. 1*

Fig. 2A

EP 4 436 103 A1

Fig. 2B

EP 4 436 103 A1

_300_

_310_ → Receive audio bitstream

_312_ ⌐ Buffer

_314_ ⌐ Provide model

_316_ ⌐ Assign score

_318_ ⌐ Monitor accumulated score

_320_ ⌐ Above threshold? — N

_322_ ⌐ Increased rate of change? — Y → _324_ Sign earlier

N

_326_ ⌐ Sign here

_328_ ⌐ More data units? — Y → _330_ Reset ref. point

N

_332_ ⌐ END

_Fig. 3_

Europäisches
Patentamt

European
Patent Office

Office européen
des brevets

# EUROPEAN SEARCH REPORT

**Application Number**

**EP 23 16 3788**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/097792 A1 (DOLBY LAB LICENSING CORP [US]; CROCKETT BRETT G [US]) 5 December 2002 (2002-12-05) | 1-7, 11-15 | INV. H04L9/32 H04N21/845 G10L25/51 |
| A | * page 4, lines 16-25; figures 1, 3-5 * * page 11, lines 6-10 * | 8-10 | |
| X | EP 4 090 015 A1 (AXIS AB [SE]) 16 November 2022 (2022-11-16) * paragraphs [0027] - [0035]; figure 2 * | 1,8-15 | |

TECHNICAL FIELDS
SEARCHED      (IPC)

H04L
H04N
G10L

The present search report has been drawn up for all claims

| Place of search | Date of completion of the search | Examiner |
|---|---|---|
| Munich | 5 September 2023 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 16 3788

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| WO 02097792 | A1 | 05-12-2002 | AU | 2002252143 B2 | 29-05-2008 |
| | | | CA | 2447911 A1 | 05-12-2002 |
| | | | CA | 2448178 A1 | 05-12-2002 |
| | | | CA | 2448182 A1 | 05-12-2002 |
| | | | CN | 1524258 A | 25-08-2004 |
| | | | EP | 1393298 A1 | 03-03-2004 |
| | | | EP | 1393300 A1 | 03-03-2004 |
| | | | EP | 1519363 A1 | 30-03-2005 |
| | | | JP | 4272050 B2 | 03-06-2009 |
| | | | JP | 2004528599 A | 16-09-2004 |
| | | | MX | PA03010749 A | 01-07-2004 |
| | | | WO | 02097790 A1 | 05-12-2002 |
| | | | WO | 02097792 A1 | 05-12-2002 |
| EP 4090015 | A1 | 16-11-2022 | CN | 115333742 A | 11-11-2022 |
| | | | EP | 4090015 A1 | 16-11-2022 |
| | | | JP | 2022174726 A | 24-11-2022 |
| | | | KR | 20220153505 A | 18-11-2022 |
| | | | TW | 202245438 A | 16-11-2022 |
| | | | US | 2022368534 A1 | 17-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8885818 B2
- US 10263783 B2
- US 10713391 B2

**Non-patent literature cited in the description**

- **SALAMON ; BELLO.** Deep Convolutional Neural Networks and Data Augmentation for Environmental Sound Classification. *arXiv:1608.04363*
- **KONS ; TOLEDO-RONEN.** Audio event classification using deep neural networks. *Proceedings of the Annual Conference of the International Speech Communication Association, INTERSPEECH,* 2013, 1482-1486